# DEMANDE DE BREVET EUROPEEN

(11) **EP 3 620 276 A1**
(43) Date de publication de la demande: **11.03.2020**
(21) Numéro de dépôt: 19188869.2
(22) Date de dépôt: 29.07.2019
(51) Int. Cl.: B25J 18/02, B25J 9/10, B25J 9/00

(54) **ACTIONNEUR TÉLESCOPIQUE À CÂBLE**

(30) Priorité: 07.08.2018 FR 1857341
(71) Demandeur: Commissariat à l'Energie Atomique et aux Energies Alternatives, 75015 Paris (FR)
(72) Inventeur: GARREC, Philippe, 91190 Gif-sur-Yvette (FR)
(74) Mandataire: Prouvez, Julien

(57) **Abrégé**

Actionneur télescopique comprenant un premier étage dans lequel est monté à coulissement selon un axe longitudinal un deuxième étage dans lequel un troisième étage est monté à coulissement selon l'axe longitudinal, l'actionneur télescopique comprenant des moyens d'actionnement comportant un élément mobile fonctionnellement relié au deuxième étage, l'actionneur télescopique comprenant également un premier brin de câble ayant une première extrémité fonctionnellement reliée au premier étage et une deuxième extrémité fonctionnellement reliée au troisième étage, le premier brin de câble étant engagé sur une première poulie solidaire du deuxième étage de manière à ce qu'un déplacement du deuxième étage relativement au premier étage dans un premier sens provoque un déplacement du troisième étage relativement au deuxième étage dans le premier sens.

## Description

### DOMAINE DE L'INVENTION

L'invention se rapporte au domaine des actionneurs linéaires et plus particulièrement aux actionneurs télescopiques.

### ARRIERE PLAN DE L'INVENTION

Il est connu des actionneurs télescopiques hydrauliques comprenant plusieurs étages tubulaires montés l'un dans l'autre à coulissement selon un axe longitudinal. Ces actionneurs permettent d'obtenir une course longitudinale supérieure à la dimension longitudinale de l'actionneur. Dans le cas d'un actionneur télescopique à trois étages, un premier étage tubulaire reçoit à coulissement un deuxième étage tubulaire dans lequel un troisième étage est monté à coulissement. Les premier et deuxième étages reçoivent des joints à lèvres qui assurent l'étanchéité et le guidage des étages dans leur coulissement relatif. L'introduction d'huile sous pression dans le premier étage provoque un déploiement des deux autres étages. Ces vérins sont fiables et robustes mais présentent l'inconvénient d'être lourds et de requérir une centrale hydraulique lourde et encombrante. Il existe également des actionneurs télescopiques électriques dans lesquels le troisième étage est solidaire de l'extrémité d'une chaine pousseuse. Ces actionneurs sont plus légers mais l'encombrement et le poids du magasin des éléments de chaîne en limitent l'usage.

### OBJET DE L'INVENTION

L'invention a pour objet de réduire la masse et l'encombrement d'un actionneur télescopique.

### RESUME DE L'INVENTION

A cet effet, on prévoit, un actionneur télescopique comprenant un premier étage dans lequel est monté à coulissement selon un axe longitudinal un deuxième étage. Un troisième étage est monté à coulissement dans le deuxième étage selon l'axe longitudinal. L'actionneur télescopique comprend des moyens d'actionnement comportant un élément mobile fonctionnellement relié au deuxième étage. L'actionneur télescopique comprend également un premier brin de câble ayant une première extrémité fonctionnellement reliée au premier étage tubulaire et une deuxième extrémité fonctionnellement reliée au troisième étage. Le premier brin de câble est engagé sur un premier renvoi de câble solidaire du deuxième étage tubulaire de manière à ce qu'un déplacement du deuxième étage relativement au premier étage dans un premier sens provoque un déplacement du troisième étage relativement au deuxième étage dans le premier sens.

On obtient ainsi un actionneur télescopique compact et léger ne requérant pas de fluide hydraulique.

L'actionneur est à double effet lorsqu'il comprend un deuxième brin de câble ayant une première extrémité fonctionnellement reliée au premier étage tubulaire et une deuxième extrémité fonctionnellement reliée au troisième étage et que le deuxième brin de câble est engagé sur un deuxième renvoi de câble solidaire du deuxième étage tubulaire de manière à ce qu'un déplacement du deuxième étage relativement au premier étage dans un deuxième sens opposé au premier provoque un déplacement du troisième étage relativement au deuxième étage dans le deuxième sens.

On réduit notablement les risques de désalignement du troisième étage lors de son déplacement dans le premier sens lorsque l'actionneur comprend un troisième brin de câble ayant une première extrémité fonctionnellement reliée au premier étage tubulaire et une deuxième extrémité fonctionnellement reliée au troisième étage et que le troisième brin de câble est engagé sur un troisième renvoi de câble solidaire du deuxième étage tubulaire de manière à ce qu'un déplacement du deuxième étage relativement au premier étage dans le premier sens provoque un déplacement du troisième étage relativement au deuxième étage dans le premier sens. Les risques de désalignement sont encore réduits lorsque le premier brin s'étend symétriquement au troisième brin de câble par rapport à l'axe longitudinal.

On réduit notablement les risques de désalignement du troisième étage lors de son déplacement dans le deuxième sens lorsque l'actionneur comprend un quatrième brin de câble ayant une première extrémité fonctionnellement reliée au premier étage tubulaire et une deuxième extrémité fonctionnellement reliée au troisième étage et que le quatrième brin de câble est engagé sur un quatrième renvoi de câble solidaire du deuxième étage tubulaire de manière à ce qu'un déplacement du deuxième étage relativement au premier étage dans le deuxième sens provoque un déplacement du troisième étage relativement au deuxième étage dans le deuxième sens. Les risques de désalignement sont encore réduits lorsque le deuxième brin de câble s'étend symétriquement au quatrième brin de câble par rapport à l'axe longitudinal.

Les effets des différences de tension dans le premier et le troisième brin de câble et du comportement non linéaire des brins de câble lors du déplacement du deuxième étage dans le premier sens sont réduits lorsque la deuxième extrémité du premier brin est reliée à un premier support intermédiaire et qu'un cinquième brin de câble s'étendant entre le premier support intermédiaire et le troisième étage. Ces effets sont encore réduits lorsque la deuxième extrémité du troisième brin est reliée au premier support intermédiaire et/ou qu'un sixième brin de câble s'étend entre le premier support intermédiaire et le troisième étage. Avantageusement, le sixième brin s'étend symétriquement au cinquième brin par rapport à l'axe longitudinal.

Les effets des différences de tension dans le deuxième et le quatrième brin de câble et du comportement non linéaire des brins de câble lors du déplacement du deuxième étage dans le deuxième sens sont réduits lorsque la deuxième extrémité du deuxième brin est reliée à un deuxième support intermédiaire et qu'un septième brin de câble s'étendant entre le deuxième support intermédiaire et le troisième étage. Ces effets sont encore réduits lorsque la deuxième extrémité du quatrième brin est reliée au deuxième support intermédiaire et/ou qu'un huitième brin de câble s'étend entre le deuxième support intermédiaire et le troisième étage. Avantageusement, le huitième brin s'étend symétriquement au septième brin par rapport à l'axe longitudinal.

Les effets des différences de tension dans le premier et le troisième brin de câble et du comportement non linéaire des brins de câble lors du déplacement du deuxième étage dans le premier sens sont encore réduits lorsque la première extrémité du premier brin est reliée à un troisième support intermédiaire et qu'un neuvième brin de câble s'étendant entre le troisième support intermédiaire et le premier étage tubulaire. Ces effets sont encore réduits lorsque la première extrémité du troisième brin est reliée au troisième support intermédiaire et/ou qu'un dixième brin de câble s'étend entre le troisième support intermédiaire et le premier étage. Avantageusement, le dixième brin s'étend symétriquement au neuvième brin par rapport à l'axe longitudinal.

Les effets des différences de tension dans le premier et le troisième brin de câble et du comportement non linéaire des brins de câble lors du déplacement du deuxième étage dans le deuxième sens sont encore réduits lorsque la première extrémité du deuxième brin est reliée à un quatrième support intermédiaire et qu'un onzième brin de câble s'étend entre le quatrième support intermédiaire et le premier étage tubulaire. Ces effets sont encore réduits lorsque la première extrémité du quatrième brin est reliée au quatrième support intermédiaire et/ou qu'un douzième brin de câble s'étend entre le quatrième support intermédiaire et le premier étage tubulaire. Avantageusement, le douzième brin s'étend symétriquement au onzième brin par rapport à l'axe longitudinal.

Avantageusement, l'un quelconque des brins de câbles est préchargé.

Au sens de la présente demande, un câble désigne tout élément souple de transmission d'efforts et couvre notamment les sangles, chaînes et courroies crantées ou non.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées, parmi lesquelles :
- la figure la est une vue schématique du profil gauche d'un exosquelette selon l'invention ;

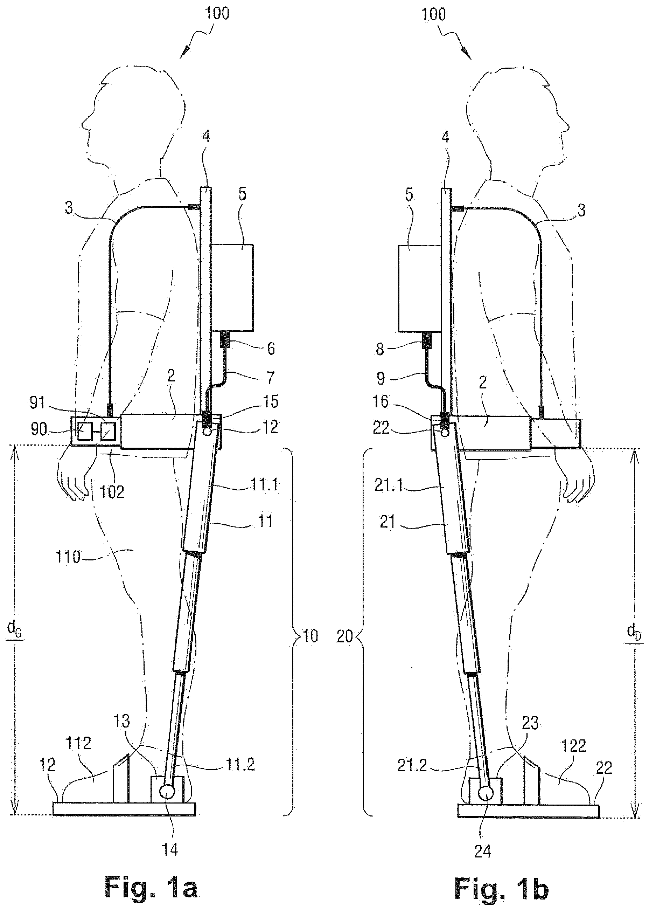

- la figure 1b est une vue schématique du profil droit d'un exosquelette selon l'invention ;
- la figure 2 est une vue schématique d'un actionneur télescopique selon un premier mode de réalisation de l'invention ;
- la figure 3 est une vue schématique d'un actionneur télescopique selon un deuxième mode de réalisation de l'invention ;
- la figure 4 est une vue schématique d'un actionneur télescopique selon un troisième mode de réalisation de l'invention ;
- la figure 5 est une vue schématique d'un actionneur télescopique selon un quatrième mode de réalisation de l'invention ;
- la figure 6 est une vue schématique d'un actionneur télescopique selon un cinquième mode de réalisation de l'invention ;
- la figure 7 est une vue schématique d'un actionneur télescopique selon un sixième mode de réalisation de l'invention ;

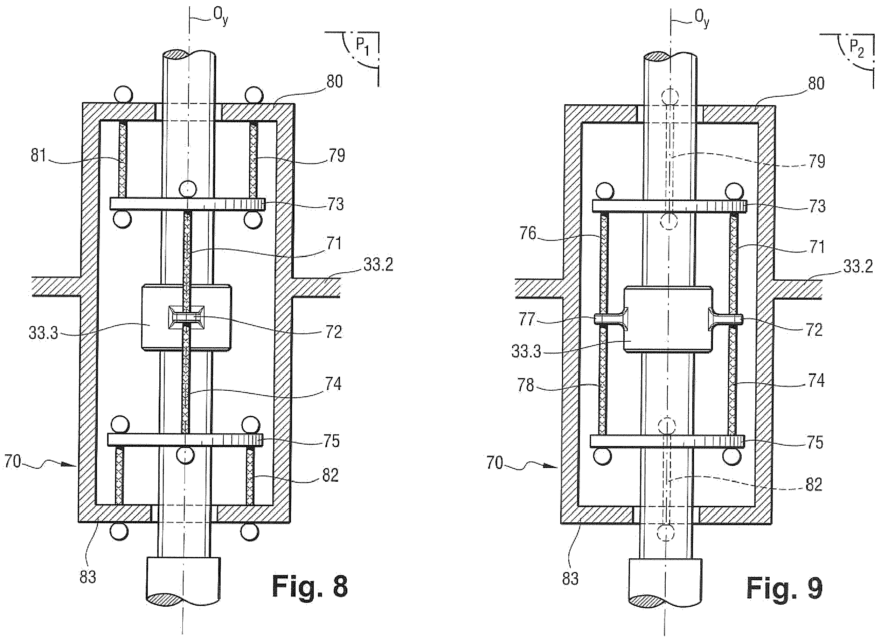

- la figure 8 est une vue schématique de détail de face de l'actionneur télescopique de la figure 7 ;
- la figure 9 est une vue schématique de détail de côté de l'actionneur télescopique de la figure 7.

### DESCRIPTION DETAILLEE DE L'INVENTION

En référence aux figures la et 1b, l'exosquelette ambulatoire selon l'invention, généralement désigné 1, est porté par un utilisateur 100. L'exosquelette 1 comprend un segment de bassin 2 relié à l'utilisateur 100 par des sangles 3 et sur lequel sont articulés un premier membre inférieur gauche 10 et un deuxième membre inférieur droit 20. Le membre inférieur gauche 10 comprend un premier actionneur 11 télescopique s'étendant le long du membre inférieur gauche 110 de l'utilisateur 100. Une première extrémité 11.1 du premier actionneur 11 est articulée sur le segment de bassin 2 et une deuxième extrémité 11.2 du premier actionneur 11 est articulée sur un segment de pied 12 via une première articulation 13 pourvue d'un premier codeur angulaire 14. Le membre inférieur droit 20 comprend un deuxième actionneur 21 télescopique s'étendant le long du membre inférieur droit 120 de l'utilisateur 100. Une première extrémité 21.1 du deuxième actionneur 21 est articulée sur le segment de bassin 2 et une deuxième extrémité 21.2 du deuxième actionneur 21 est articulée sur un segment de pied 22 via une deuxième articulation 23 pourvue d'un deuxième codeur angulaire 24.

Le segment de bassin 2 et les segments de pied 12 et 22 sont respectivement reliés à la hanche 102, au pied gauche 112 et au pied droit 122 de l'utilisateur 100 par des sangles. L'exosquelette 1 comprend également un segment dorsal 4 solidaire du segment de bassin 2 et sur lequel est monté une unité de motorisation 5. L'unité de motorisation 5 comporte une première douille cannelée 6 reliée par un premier arbre flexible 7 à une deuxième douille cannelée 15 du premier actionneur 11. L'unité de motorisation 5 comporte également une troisième douille cannelée 8 reliée par un deuxième arbre flexible 9 à une quatrième douille cannelée 16 du deuxième actionneur 21. L'unité de motorisation 5 comprend ici un premier et un deuxième motoréducteur électrique 5.1 et 5.2 respectivement reliés aux première et deuxième douilles cannelées 6 et 8. Le premier codeur 14, le deuxième codeur 24 ainsi que l'unité de motorisation 5 sont reliés à une unité 90 de contrôle et de commande portée par le segment de bassin 2 et alimentée par une batterie 91.

Le premier actionneur 11 étant identique au deuxième actionneur 21, la description qui suit du premier actionneur 11 est valable pour le deuxième actionneur 21.

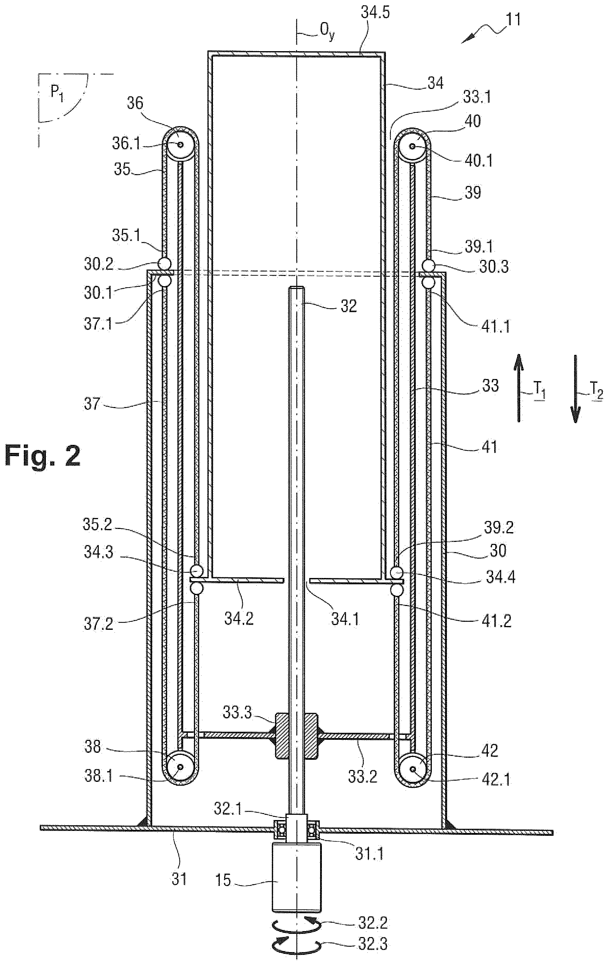

En référence à la figure 2, l'actionneur 11 selon un premier mode de réalisation de l'invention comprend un premier étage 30 tubulaire en forme de cylindre droit.

Le premier étage 30 comprend un fond 31 circulaire au centre duquel s'étend une vis 32 à bille montée à rotation selon l'axe longitudinal Oy (ici un axe vertical selon la représentation de la figure 2) dans un palier 31.1. La première extrémité 32.1 de la vis 32 est solidaire de la deuxième douille cannelée 15. Un deuxième étage 33 est monté à coulissement, selon l'axe longitudinal Oy, dans le premier étage 30 pour venir en saillie de l'extrémité ouverte 30.1 du premier étage 30. Un troisième étage 34 est monté à coulissement, selon l'axe longitudinal Oy, dans le deuxième étage 33 pour venir en saillie de l'extrémité ouverte 33.1 du deuxième étage 33. Comme visible en figure 2, un écrou 33.3 soudé sur le fond 33.2 du deuxième étage 33 coopère avec la vis 32. La vis 32 s'étend également au travers d'un orifice 34.1 pratiqué au centre du fond 34.2 du troisième étage 34.

L'actionneur 11 comprend un premier brin de câble 35 ayant une première extrémité 35.1 sertie sur un point 30.2 de l'extrémité ouverte 30.1 du premier étage 30 et une deuxième extrémité 35.2 sertie sur un point 34.3 du fond 34.2 du troisième étage 34. Le premier brin de câble 35 est engagé sur une première poulie 36 montée à rotation sur un axe 36.1 vissé sur l'extrémité ouverte 33.1 du deuxième étage 33. L'axe 36.1 s'étend, ici, dans une direction perpendiculaire à l'axe longitudinal Oy.

L'actionneur 11 comprend également un deuxième brin de câble 37 ayant une première extrémité 37.1 sertie sur le point 30.2 du premier étage 30 et une deuxième extrémité 37.2 sertie sur le point 34.3 du troisième étage 34. Le deuxième brin de câble 37 est engagé sur une deuxième poulie 38 montée à rotation sur un axe 38.1 vissé sur le fond 33.2 du deuxième étage 33. L'axe 38.1 s'étend, ici, dans une direction perpendiculaire à l'axe longitudinal Oy.

L'actionneur 11 comprend également un troisième brin de câble 39 ayant une première extrémité 39.1 sertie sur un point 30.3 de l'extrémité ouverte 30.1 du premier étage 30 et une deuxième extrémité 39.2 sertie sur un point 34.4 du fond 34.2 du troisième étage 34. Le troisième brin de câble 39 est engagé sur une troisième poulie 40 montée à rotation sur un axe 40.1 vissé sur l'extrémité ouverte 33.1 du deuxième étage 33. L'axe 40.1 s'étend, ici, dans une direction perpendiculaire à l'axe longitudinal Oy. Comme visible sur la figure 2, le premier brin de câble 35 s'étend symétriquement par rapport à l'axe longitudinal Oy au troisième brin de câble 39.

L'actionneur 11 comprend également un quatrième brin de câble 41 ayant une première extrémité 41.1 sertie sur le point 30.3 du premier étage 30 et une deuxième extrémité 41.2 sertie sur le point 34.4 du troisième étage 34. Le quatrième brin de câble 41 est engagé sur une quatrième poulie 42 montée à rotation sur un axe 42.1 vissé sur le fond 33.2 du deuxième étage 33. L'axe 42.1 s'étend, ici, dans une direction perpendiculaire à l'axe longitudinal Oy. Comme visible en figure 2, le quatrième brin de câble 41 s'étend symétriquement au premier brin de câble 35 par rapport à l'axe longitudinal Oy.

Le fond circulaire 31 du premier étage 30 correspond à la première extrémité 11.1 du premier actionneur 11 et l'extrémité 34.5 du deuxième étage 33 opposée au fond 34.2 correspond à la deuxième extrémité 11.2 du premier actionneur 11. Les points 30.2, 30.3, 34.3 et 34.4 ainsi que les premier, deuxième, troisième, quatrième brins de câble 35, 37, 39, 41 sont ici, tous dans un même premier plan P₁.

Une rotation de la vis à billes 32 dans un premier sens de rotation 32.2 positif entraîne une translation longitudinale de l'écrou 33.3 dans un sens tendant à l'éloigner du fond 31. Cette translation de l'écrou 33.3 provoque un déplacement du deuxième étage 33 relativement au premier étage 30 dans un premier sens T₁ selon une direction longitudinale. Le déplacement de la première poulie 36 du deuxième étage 33 relativement au premier point 30.2 du premier étage 30 selon le premier sens T₁ entraîne un raccourcissement de la portion du premier brin de câble 35 s'étendant entre le point 34.3 du fond 34.2 du deuxième étage 33 et la première poulie 36. Ce raccourcissement provoque un déplacement du troisième étage 34 relativement au deuxième étage 33 dans le premier sens T₁. Le déplacement du deuxième étage 33 relativement au premier étage 30 dans le premier sens T₁ agit de manière similaire sur le troisième brin de câble 39 qui contribue également au déplacement du troisième étage 34 relativement au deuxième étage 33.

Une rotation de la vis à billes 32 dans un deuxième sens de rotation 32.3 négatif entraîne une translation longitudinale de l'écrou 33.3 dans un sens tendant à le rapprocher du fond 31. Cette translation de l'écrou 33.3 provoque un déplacement du deuxième étage 33 relativement au premier étage 30 dans un deuxième sens T₂ opposé au premier sens T₁. Le déplacement de la deuxième poulie 38 du deuxième étage 33 relativement au premier point 30.2 du premier étage 30 selon le deuxième sens T₂ entraîne un raccourcissement de la portion du deuxième brin de câble 37 s'étendant entre le point 34.3 du fond 34.2 du deuxième étage et la deuxième poulie 38. Ce raccourcissement provoque un déplacement du troisième étage 34 relativement au deuxième étage 33 dans le deuxième sens T₂. Le déplacement du deuxième étage 33 relativement au premier étage 30 dans le deuxième sens T₂ agit de manière similaire sur le quatrième brin de câble 41 qui contribue également au déplacement du troisième étage 34 relativement au deuxième étage 33.

On obtient ainsi un actionneur télescopique compact et léger qui peut idéalement mis en oeuvre dans l'exosquelette ambulatoire 1.

Lorsque l'utilisateur 100 souhaite marcher, il transfère une partie de la charge exercée sur son pied gauche 112 vers son pied droit 122 et commence à lever le talon gauche.

Le codeur 14 de l'articulation 13 mesure un changement dans la position angulaire relative du segment de pied 12 de l'exosquelette 1 par rapport au premier actionneur 11 et transmet cette information à l'unité de commande 90. L'unité de commande 90 analyse cette mesure et commande l'unité de motorisation 5 de manière à provoquer une rotation de la première douille cannelée 6 pour provoquer une rotation de la vis à bille 32 dans le deuxième sens de rotation 32.3. Cette rotation provoque une rétraction du premier actionneur 11 qui réduit la distance d_{G} séparant le segment de pied gauche 12 du segment de bassin 2. L'unité de commande 90 asservit le mouvement de la première douille cannelée 6 de l'unité de motorisation 5 sur la position angulaire relative du segment de pied 12 par rapport au premier actionneur 11. L'utilisateur peut alors plier son membre inférieur gauche 110, son mouvement étant accompagné par une rétraction du premier actionneur 11.

Lorsque l'utilisateur 100 souhaite déplier son membre inférieur gauche 110, il modifie la position relative angulaire du segment de pied 12 par rapport au premier actionneur 11 et cette information est transmise à l'unité de commande 90. L'unité de commande 90 analyse cette mesure et commande l'unité de motorisation 5 de manière à provoquer une rotation de la première douille cannelée 6 pour provoquer une rotation de la vis à bille 32 dans le premier sens de rotation 32.2. Cette rotation provoque un déploiement du premier actionneur 11 qui augmente la distance d_{G} séparant le segment de pied gauche 12 du segment de bassin 2. L'unité de commande 90 asservit le mouvement de la première douille cannelée 6 de l'unité de motorisation 5 sur la position angulaire relative du segment de pied 12 par rapport au premier actionneur 11. L'utilisateur peut alors déplier son membre inférieur gauche 110, son mouvement étant accompagné par un déploiement du premier actionneur 11.

Les éléments identiques ou analogues à ceux précédemment décrits porteront une référence numérique identique à ceux-ci dans la description qui suit des deuxième, troisième, quatrième, cinquième et sixième modes de réalisation.

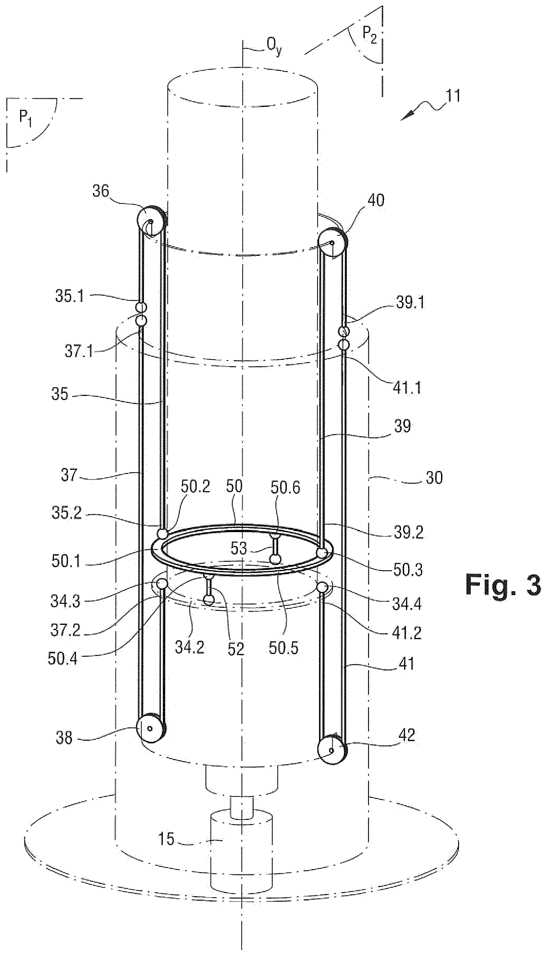

En référence à la figure 3, l'actionneur télescopique 11 selon le deuxième mode de réalisation de l'invention comprend un premier support intermédiaire 50-ici en forme d'anneau- dont la face supérieure 50.1 est reliée à la deuxième extrémité 35.2 du premier brin de câble 35 en un point 50.2. La face supérieure 50.1 du premier support intermédiaire 50 est également reliée à la deuxième extrémité 39.2 du troisième brin de câble 39 en un point 50.3. Les points 50.2 et 50.3 sont -ici-positionnés sur la face supérieure 50.1 du premier support intermédiaire 50 de manière symétrique par rapport à l'axe longitudinal Oy. Un cinquième brin de câble 52 s'étend entre un point 50.4 de la face inférieure 50.5 du premier support intermédiaire 50 et le fond 34.2 du troisième étage 34. Un sixième brin de câble 53 s'étend entre la face inférieure 50.5 du premier support intermédiaire 50 et le fond 34.2 du troisième étage 34. Le cinquième brin de câble 52 s'étend symétriquement au sixième brin de câble 53 par rapport à l'axe longitudinal Oy dans un deuxième plan P₂ orthogonal au premier plan P₁.

Le premier support intermédiaire 50 et les cinquième et sixième brins de câble 52 et 53 réduisent les moments de flexion entre le deuxième étage 33 et le troisième étage 34 de l'actionneur 11. Ces moments de flexion et qui peuvent notamment être générés par une distribution non homogène des tensions dans le premier brin de câble 35 et le troisième brin de câble 39 ainsi que par des différences entre les raideurs du premier brin de câble 35 et du troisième brin de câble 39. On améliore alors la régularité du frottement de l'actionneur 11 lors de son déploiement et ainsi la linéarité de transmission des efforts entre le pied de l'exosquelette et le moteur.

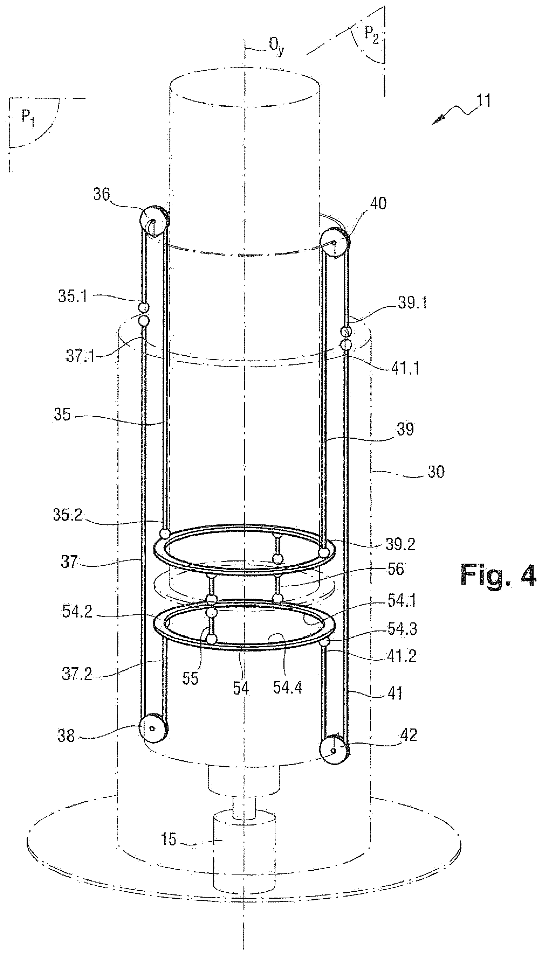

En référence à la figure 4, l'actionneur télescopique 11 selon le troisième mode de réalisation de l'invention comprend un deuxième support intermédiaire 54 -ici en forme d'anneau- dont la face inférieure 54.1 est reliée à la deuxième extrémité 37.2 du deuxième brin de câble 37 en un point 54.2. La face inférieure 54.1 du deuxième support intermédiaire 54 est également reliée à la deuxième extrémité 41.2 du quatrième brin de câble 41 en un point 54.3. Les points 54.2 et 54.3 sont -ici-positionnés sur la face inférieure 54.1 du deuxième support intermédiaire 54 de manière symétrique par rapport à l'axe longitudinal Oy. Un septième brin de câble 55 et un huitième brin de câble 56 s'étendent entre la face supérieure 54.4 du deuxième support intermédiaire 54 et le fond 34.2 du troisième étage 34. Le septième brin de câble 55 s'étend symétriquement au huitième brin de câble 56 par rapport à l'axe longitudinal Oy dans le deuxième plan P₂.

Le deuxième support intermédiaire 54 et les septième et huitième brins de câble 55 et 56 réduisent les moments de flexion entre le deuxième étage 33 et le troisième étage 34 de l'actionneur 11. On améliore alors la linéarité du comportement de l'actionneur 11 lors de sa rétraction.

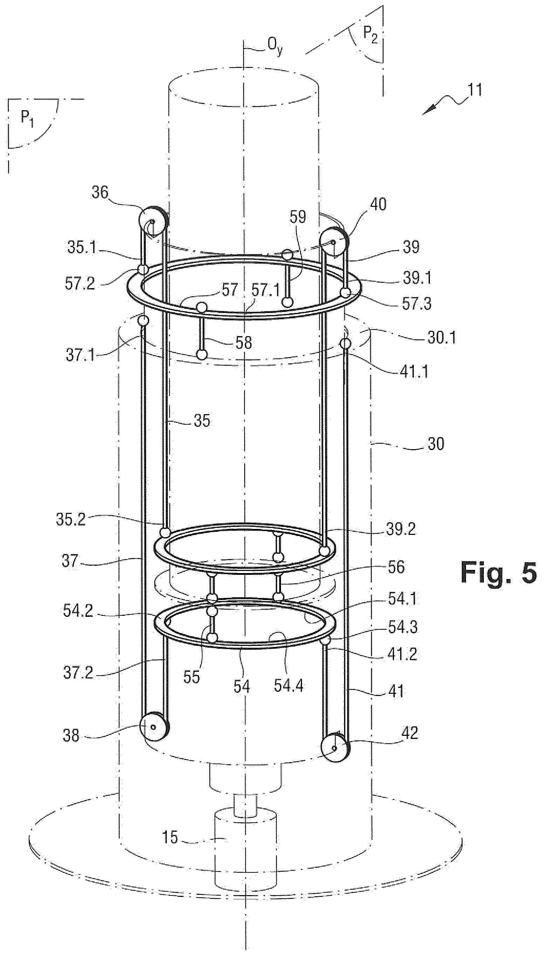

En référence à la figure 5, l'actionneur télescopique 11 selon le quatrième mode de réalisation de l'invention comprend un troisième support intermédiaire 57 -ici en forme d'anneau- dont la face supérieure 57.1 est reliée à la première extrémité 35.1 du premier brin de câble 35 en un point 57.2. La face supérieure 57.1 du troisième support intermédiaire 57 est également reliée à la première extrémité 39.1 du troisième brin de câble 39 en un point 57.3. Les points 57.2 et 57.3 sont -ici-positionnés sur la face supérieure 57.1 du troisième support intermédiaire 57 de manière symétrique par rapport à l'axe longitudinal Oy. Un neuvième brin de câble 58 et un dixième brin de câble 59 s'étendent entre la face inférieure 57.4 du troisième support intermédiaire 57 et l'extrémité ouverte 30.1 du premier étage 30. Le neuvième brin de câble 58 s'étend symétriquement au dixième brin de câble 59 par rapport à l'axe longitudinal Oy dans le deuxième plan P₂.

Le troisième support intermédiaire 57 et les neuvième et dixième brins de câble 58 et 59 réduisent les moments de flexion entre le premier étage 30 et le deuxième étage 33 de l'actionneur 11. On améliore alors la linéarité du comportement de l'actionneur 11 lors de son déploiement.

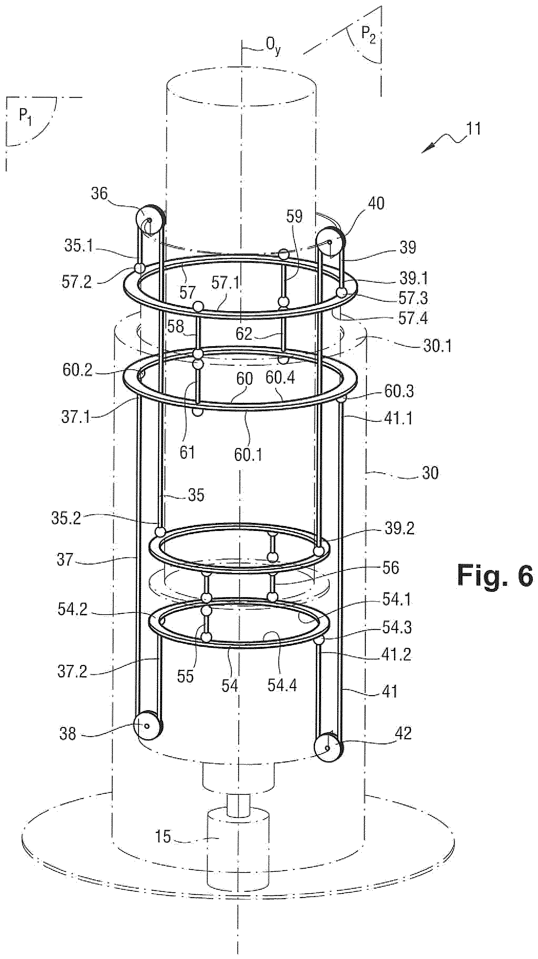

En référence à la figure 6, l'actionneur télescopique 11 selon le cinquième mode de réalisation de l'invention comprend un quatrième support intermédiaire 60 -ici en forme d'anneau- dont la face inférieure 60.1 est reliée à la première extrémité 37.1 du deuxième brin de câble 37 en un point 60.2. La face inférieure 60.1 du quatrième support intermédiaire 60 est également reliée à la première extrémité 41.1 du quatrième brin de câble 41 en un point 60.3. Les points 60.2 et 60.3 sont -ici-positionnés sur la face inférieure 60.1 du quatrième support intermédiaire 60 de manière symétrique par rapport à l'axe longitudinal Oy. Un onzième brin de câble 61 et un douzième brin de câble 62 s'étendent entre la face supérieure 60.4 du quatrième support intermédiaire 60 et l'extrémité ouverte 30.1 du premier étage 30. Le onzième brin de câble 61 s'étend symétriquement au douzième brin de câble 62 par rapport à l'axe longitudinal Oy dans le deuxième plan P₂.

Le quatrième support intermédiaire 60 et les onzième et douzième brins de câble 61 et 62 réduisent les moments de flexion entre le premier étage 30 et le deuxième étage 33 de l'actionneur 11 et qui peuvent être générés par une distribution non homogène des tensions dans le deuxième brin de câble 37 et le quatrième brin de câble 41 ainsi que par des différences entre les raideurs du deuxième brin de câble 37 et du quatrième brin de câble 41 et le comportement non linéaire de ces brins de câble. On améliore alors la linéarité du comportement de l'actionneur 11 lors de sa rétraction.

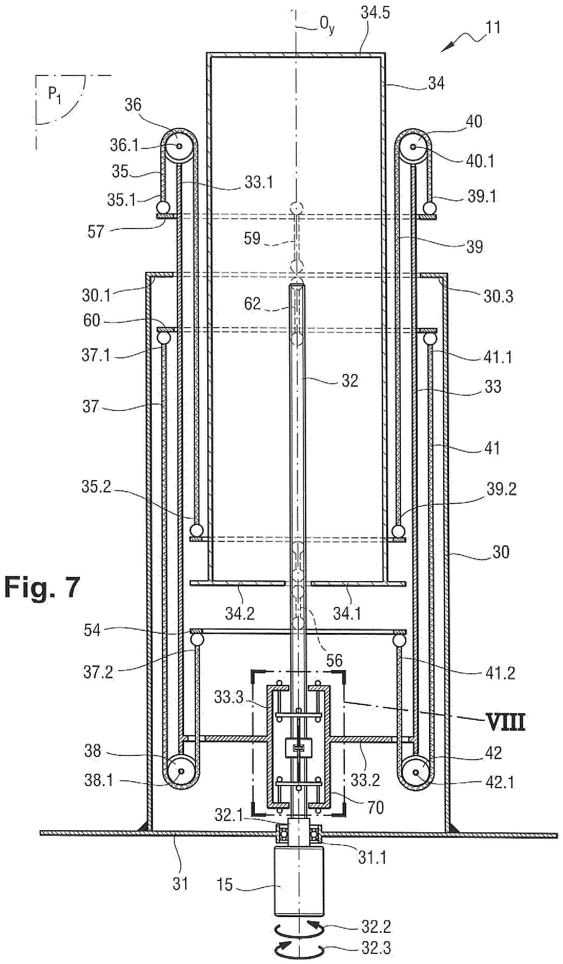

Avantageusement, tout ou partie des brins de câble est pré-chargée pour améliorer la linéarité du comportement du premier actionneur 11
En référence à la figure 7, l'écrou 33.3 est relié au fond 33.2 du deuxième étage 33 par l'intermédiaire d'un dispositif d'anti rotation 70. Le dispositif d'anti-rotation 70 comprend un treizième brin de câble 71 serti sur un premier oeillet 72 solidaire de l'écrou 33.3 et s'étendant selon une direction longitudinale entre le premier oeillet 72 et un cinquième support intermédiaire 73. Un quatorzième brin de câble 74 est également serti sur le premier oeillet 72 et s'étend selon une direction longitudinale entre le premier oeillet 72 et un sixième support intermédiaire 75. Un quinzième brin de câble 76 est serti sur un deuxième oeillet 77 diamétralement opposé au premier oeillet 72 et s'étend selon une direction longitudinale entre le deuxième oeillet 77 et le cinquième support intermédiaire 73. Un seizième brin de câble 78 est également serti sur le deuxième oeillet 77 et s'étend selon une direction longitudinale entre le deuxième oeillet 77 et le sixième support intermédiaire 75. Le treizième brin de câble 71, le quatorzième brin de câble 74, le quinzième brin de câble 76 et le seizième brin de câble 78 s'étendent dans le plan P2.

Le dispositif d'anti-rotation 70 comprend également un dix-septième brin de câble 79 qui s'étend selon une direction longitudinale entre le cinquième support intermédiaire 73 et un premier disque 80 solidaire du fond 33.2 du deuxième étage 33. Un dix-huitième brin de câble 81 s'étend selon une direction longitudinale entre le cinquième support intermédiaire 73 et le premier disque 80 solidaire du fond 33.2 du deuxième étage 33. Le dispositif d'anti-rotation 70 comprend également un dix-neuvième brin de câble 82 qui s'étend selon une direction longitudinale entre le sixième support intermédiaire 75 et un deuxième disque 83 solidaire du fond 33.2 du deuxième étage 33. Un vingtième brin de câble 84 s'étend selon une direction longitudinale entre le cinquième support intermédiaire 73 et le deuxième disque 83.

Le dix-septième brin de câble 79, le dix-huitième brin de câble 81, le dix-neuvième brin de câble 82 et le vingtième brin de câble 84 s'étendent dans le plan P1.

Le dix-septième brin de câble 79, le dix-huitième brin de câble 81, le dix-neuvième brin de câble 82 et le vingtième brin de câble 84 sont pré-chargés et exercent des efforts s'opposant à un entraînement en rotation de l'écrou 33.3 par la vis 32 lors d'une rotation de la deuxième douille cannelée 15 dans les deux sens de déplacement de l'écrou 33.3 relativement à la vis 32. Ils réalisent alors une fonction d'anti-rotation de sorte qu'une rotation de la vis 32 provoque un déplacement de l'écrou 33.3 relativement à la vis 32. Cet agencement réduit encore les efforts parasites dans l'actionneur télescopique 11.

Les divers modes de réalisation peuvent être librement combinés entre eux afin d'en combiner les avantages spécifiques.

Bien entendu, l'invention n'est pas limitée à ce qui vient d'être décrit, mais englobe toute variante entrant dans le cadre de l'invention telle que définie par les revendications.

En particulier,
- bien qu'ici le segment dorsal soit solidaire du segment de bassin, l'invention s'applique également à d'autres modes de liaison du segment dorsal et du segment de bassin, voire une absence de liaison ;
- bien qu'ici l'unité de motorisation comprenne une douille cannelée, l'invention s'applique également à d'autres types de sorties de mouvement comme par exemple un arbre claveté, un emmanchement conique ou des roues dentées ;
- bien qu'ici l'actionneur comprenne une douille cannelée, l'invention s'applique également à d'autres types de moyens d'actionnement comme par exemple un arbre claveté, un emmanchement conique, des roues dentées ou un motoréducteur dédié;
- bien qu'ici les étages soient tubulaires en forme de cylindre droit, l'invention s'applique également à d'autres formes d'étages comme par exemple des étages tubulaires de forme rectangulaire, triangulaire ou quelconque ou encore des étages non tubulaire en forme de cornière ou de forme quelconque;
- bien qu'ici l'actionneur télescopique comporte un écrou qui coopère avec une vis, l'invention s'applique également à d'autres types d'élément mobile fonctionnellement relié au deuxième étage comme par exemple un vérin hydraulique, un vérin pneumatique, une crémaillère ou un levier ;
- bien qu'ici les extrémités des brins de câble soient serties sur les supports, les étages et/ou l'écrou, l'invention s'applique également à d'autres types de liaison fonctionnelle des brins de câble comme par exemple un noeud, un serre-câble, une soudure, un collage ou un tour mort ;
- bien qu'ici les poulies soient vissées sur les étages, l'invention s'applique à d'autres moyens de solidariser une poulie à un étage comme par exemple une soudure ou un collage ;
- bien qu'ici les points de sertissage du premier et du deuxième brin de câble soient confondus, l'invention s'applique également à des points de liaisons des premier et deuxième brins de câbles au premier étage distincts. Il en va de même pour les autres brins de câble dont les points de liaison sont confondus ;
- bien qu'ici des poulies soient fixées à proximité des extrémités des étages, l'invention s'applique également à d'autres implantations des poulies comme par exemple des poulies implantées au milieu ou en des endroits quelconques des étages ;
- bien qu'ici des poulies soient fixées à proximité des fonds des étages, l'invention s'applique également à d'autres implantations des poulies comme par exemple des poulies implantées au milieu ou en des endroits quelconques des étages ;
- bien qu'ici le vérin comprenne une vis à billes, l'invention s'applique également à d'autres types de vis comme par exemple une vis à filets simples, ou à rouleaux ;
- bien qu'ici l'ensemble des câbles du vérin soient pré-chargés, l'invention s'applique également à un unique câble pré-chargé ou seulement une fraction des câbles pré-chargés ;
- bien qu'ici les supports intermédiaires soient en forme d'anneau, l'invention s'applique également à d'autres formes de support intermédiaire comme par exemple un support de forme carrée, triangulaire, ovale ou de forme quelconque ;
- bien qu'ici les brins de câble soient engagés sur des poulies, l'invention s'applique également à d'autres types de renvois de câble comme par exemple un axe en bronze, en matériau auto lubrifiant ou en polytetrafluoroéthylène, un anneau ou un perçage ;
- bien qu'ici les axes des poulies s'étendent dans une direction perpendiculaire à l'axe longitudinal Oy, l'invention s'applique également à toute autre orientation des axes des poulies.

## Revendications

1. Actionneur télescopique (11) comprenant un premier étage (30) dans lequel est monté à coulissement selon un axe longitudinal (Oy) un deuxième étage (33) dans lequel un troisième étage (34) est monté à coulissement selon l'axe longitudinal (Oy), l'actionneur télescopique (11) comprenant des moyens d'actionnement (15) comportant un élément mobile (33.3) fonctionnellement relié au deuxième étage (33), l'actionneur télescopique (11) comprenant également un premier brin de câble (35) ayant une première extrémité (35.1) fonctionnellement reliée au premier étage (30) et une deuxième extrémité (35.2) fonctionnellement reliée au troisième étage (34), le premier brin de câble (35) étant engagé sur un premier renvoi de câble (36) solidaire du deuxième étage (33) de manière à ce qu'un déplacement du deuxième étage (33) relativement au premier étage (30) dans un premier sens (T₁) provoque un déplacement du troisième étage (34) relativement au deuxième étage (30) dans le premier sens (T₁),
dans lequel la deuxième extrémité (35.2) du premier brin de câble (35) est reliée à un premier support intermédiaire (50), un cinquième brin de câble (52) s'étendant entre le premier support intermédiaire (50) et le troisième étage (34).

2. Actionneur télescopique (11) selon la revendication 1, comprenant un deuxième brin de câble (37) ayant une première extrémité (37.1) fonctionnellement reliée au premier étage (30) et une deuxième extrémité (37.2) fonctionnellement reliée au troisième étage (34), le deuxième brin de câble (37) étant engagé sur un deuxième renvoi de câble (38) solidaire du deuxième étage (33) de manière à ce qu'un déplacement du deuxième étage (33) relativement au premier étage (30) dans un deuxième sens (T₂) opposé au premier (T₁) provoque un déplacement du troisième étage (34) relativement au deuxième étage (33) dans le deuxième sens (T₂).

3. Actionneur télescopique (11) selon l'une quelconque des revendications précédentes, comprenant un troisième brin de câble (39) ayant une première extrémité (39.1) fonctionnellement reliée au premier étage (30) et une deuxième extrémité (39.2) fonctionnellement reliée au troisième étage (34), le troisième brin de câble (39) étant engagé sur un troisième renvoi de câble (40) solidaire du deuxième étage (33) de manière à ce qu'un déplacement du deuxième étage (33) relativement au premier étage (30) dans le premier sens (T₁) provoque un déplacement du troisième étage (34) relativement au deuxième étage (30) dans le premier sens (T₁).

4. Actionneur télescopique (11) selon la revendication 3, dans lequel le premier brin de câble (35) s'étend symétriquement au troisième brin de câble (39) par rapport à l'axe longitudinal (Oy).

5. Actionneur télescopique (11) selon l'une quelconque des revendications précédentes, comprenant un quatrième brin de câble (41) ayant une première extrémité (41.1) fonctionnellement reliée au premier étage (30) et une deuxième extrémité (41.2) fonctionnellement reliée au troisième étage (34), le quatrième brin de câble (41) étant engagé sur un quatrième renvoi de câble (42) solidaire du deuxième étage (33) de manière à ce qu'un déplacement du deuxième étage (33) relativement au premier étage (30) dans le deuxième sens (T₂) provoque un déplacement du troisième étage (34) relativement au deuxième étage (33) dans le deuxième sens (T₂).

6. Actionneur télescopique (11) selon la revendication 5, dans lequel le deuxième brin de câble (37) s'étend symétriquement au quatrième brin de câble (41) par rapport à l'axe longitudinal (Oy).

7. Actionneur télescopique (11) selon la revendication 3, dans lequel la deuxième extrémité (39.2) du troisième brin de câble (39) est reliée au premier support intermédiaire (50).

8. Actionneur télescopique (11) selon la revendication 1 ou 7, dans lequel un sixième brin de câble (53) s'étend entre le premier support intermédiaire (50) et le troisième étage (34).

9. Actionneur télescopique (11) selon la revendication 8, dans lequel le sixième brin de câble (53) s'étend symétriquement au cinquième brin de câble (52) par rapport à l'axe longitudinal (Oy).

10. Actionneur télescopique (11) selon l'une quelconque des revendications précédentes, dans lequel la deuxième extrémité (37.2) du deuxième brin de câble (37) est reliée à un deuxième support intermédiaire (54), un septième brin de câble (55) s'étendant entre le deuxième support intermédiaire (54) et le troisième étage (34).

11. Actionneur télescopique (11) selon les revendications 5 et 10, dans lequel la deuxième extrémité (41.2) du quatrième brin de câble (41) est reliée au deuxième support intermédiaire (54).

12. Actionneur télescopique (11) selon la revendication 10 ou 11, dans lequel un huitième brin de câble (56) s'étend entre le deuxième support intermédiaire (54) et le troisième étage (34).

13. Actionneur télescopique (11) selon la revendication 12, dans lequel le huitième brin de câble (56) s'étend symétriquement au septième brin de câble (55) par rapport à l'axe longitudinal (Oy).

14. Actionneur télescopique (11) selon l'une quelconque des revendications précédentes, dans lequel la première extrémité (35.1) du premier brin de câble (35) est reliée à un troisième support intermédiaire (57), un neuvième brin de câble (58) s'étendant entre le troisième support intermédiaire (57) et le premier étage (30).

15. Actionneur télescopique (11) selon les revendications 3 et 14, dans lequel la première extrémité (39.1) du troisième brin de câble (39) est reliée au troisième support intermédiaire (57).

16. Actionneur télescopique (11) selon la revendication 14 ou la revendication 15, dans lequel un dixième brin de câble (59) s'étend entre le troisième support intermédiaire (57) et le premier étage (30).

17. Actionneur télescopique (11) selon la revendication 16, dans lequel le dixième brin de câble (59) s'étend symétriquement au neuvième brin de câble (58) par rapport à l'axe longitudinal (Oy).

18. Actionneur télescopique (11) selon l'une quelconque des revendications précédentes, dans lequel la première extrémité (37.1) du deuxième brin de câble (37) est reliée à un quatrième support intermédiaire (60), un onzième brin de câble (61) s'étendant entre le quatrième support intermédiaire (60) et le premier étage (30).

19. Actionneur télescopique (11) selon les revendications 4 et 18, dans lequel la première extrémité (41.1) du quatrième brin de câble (41) est reliée au quatrième support intermédiaire (60).

20. Actionneur télescopique (11) selon la revendication 18 ou la revendication 19, dans lequel un douzième brin de câble (62) s'étend entre le quatrième support intermédiaire (60) et le premier étage (30).

21. Actionneur télescopique (11) selon la revendication 20, dans lequel le douzième brin de câble (62) s'étend symétriquement au onzième brin de câble (61) par rapport à l'axe longitudinal (Oy).

22. Actionneur télescopique (11) selon l'une quelconque des revendications précédentes, dans lequel l'un quelconque des brins de câbles (35, 37, 39, 41, 52, 53, 55, 56, 58, 59, 61, 62) est préchargé.

23. Exosquelette ambulatoire comprenant un actionneur télescopique selon l'une quelconque des revendications précédentes.
